# EUROPEAN PATENT APPLICATION

(11) **EP 3 919 285 A1**
(43) Date of publication of application: **08.12.2021**
(21) Application number: 20748518.6
(22) Date of filing: 27.01.2020
(51) Int. Cl.: B42D 25/00, B42D 25/324, B42D 25/355, B32B 27/10

(54) **POLYMER-CONTAINING COMPOSITE SECURITY ARTICLE**

(30) Priority: 28.01.2019 RU 2019102192
(71) Applicant: Joint Stock Company "Goznak", Saint-Petersburg, 197046 (RU)
(72) Inventor: TRACHUK, Arkady Vladimirovich, Saint-Petersburg, 199004 (RU); KURYATNIKOV, Andrey Borisovich, Moscow, 129128 (RU); SHCHEPIN, Victor Gennadievich, Moscow, 127562 (RU); PAVLOV, Igor Vasilievich, Moscow, 115193 (RU); KORNILOV, Georgy Valentinovich, Moscow, 117198 (RU); FEDOROVA, Elena Mikhaylovna, Moscow, 115093 (RU); IVANTSOV, Andrey Viktorovich, Moscow region, Vidnoe, 142703 (RU); KHARLAMOV, Konstantin Vladimirovich, Perm, 614087 (RU); AKININ, Alexey Borisovich, Moscow, 109462 (RU); TURKINA, Elena Samuilovna, Moscow, 119454 (RU); CHEKUNIN, Dmitry Borisovich, Moscow region, Mytischi, 141006 (RU)
(74) Representative: Zimmermann, Tankred Klaus
(86) International application number: PCT/RU2020/050008
(87) International publication number: WO 2020/159406

(57) **Abstract**

The invention relates to composite articles and laminated polymeric materials, for example, paper and plastic-based materials for tokens, and can be used in the manufacture of security articles. An article comprises a disc insert of laminated plastic and an outer metal. The insert includes stacked paper sheets impregnated with a polymer binder. Surface of each sheet is covered with a polymer layer and comprises visual and/or hidden security features. The ring and the disc insert are permanently joined together. At least one of the article components has an embossing. Dimensions of the article are in conformity with the relations: 0.8≤δ2/δ1<1; D1-D2≥8; 0.3≤S1/S2<0.9; D2>16 mm; Δ≤1, where D1 is outer diameter of the metal ring, excluding edge surface, mm; D2 - diameter of the disc insert, mm; S1 - area of the metal ring, excluding edge surface, mm², S2 - area of the disc insert, mm²; δ1 - maximum thickness of the metal ring, mm; δ2 - maximum thickness of the disc insert, mm; Δ - difference between maximum and minimum protruding elements of the metal component of the article, mm. The article has an enhanced level of security and is simple both in the manufacture and in its authentication.

## Description

The invention relates to composite articles and laminated polymeric materials, for example, paper and plastic-based materials for tokens, and can be used in the manufacture of security articles such as coins, tokens, medals, labels.

Currently, developers in this technical field are striving to create or use processes and materials enabling the manufacture of composite articles, which, on the one hand, would be difficult to counterfeit, and on the other hand, could be easily verified for their authenticity.

A polystyrene composition for token of a coin-operated machine is known which comprises, as additives, activated amorphous carbon and titanium dioxide (RU 2111987, 27.05.1998). The composition comprises, as polystyrene, high-impact UPS-825E polystyrene and provides a polymer composition with adjustable optical characteristics in the IR region of spectrum.

Similar token articles from various plastics (polyacrylate, polystyrene, polyvinyl acetate, etc.) for mass production of tokens for coin-operated devices, are known from US 3153469, 18.09.1961.

A polymer-containing composite article based on polystyrene and metal is disclosed in US 3542180, 24.11.1970. The article comprises metal as an additive in the form of finely dispersed metal filler.

SU 1147344, 30.05.1985, discloses a composite article, a coin simulator, in the form of a two-layer plate having a hole and an elastic polymer/rubber gasket covering the hole. Elastic gaskets are formed by at least one film layer.

A token for payment of fares in subways, payphones, vending and gaming machines is known from the art, which is configured based on a polymer material and comprises coding elements such as a diffuser, luminescent substances, absorbers, and additional marks applied on its flat surfaces. The token can be made by injection molding in the shape of a flat round disc, rectangle, triangle, or another shape (RU 2121285, 10.11.1998). However, the token is made of a single material, which makes it easier to counterfeit.

A laminated identification document is known, comprising a permanently joined stack of document elements, which consists of an upper and lower translucent layers of a polymer material, a substrate of a translucent polymer material and a layer forming a contour layer of the substrate, an information insert placed on the substrate under the upper translucent layer with a window formed therein and containing information about the document owner. Finely dispersed Teflon coating is spot-sprayed on the entire face of the information insert over the entire surface of the document, except for the area for the photograph. In addition to the document owner details, the information insert comprises a set of code inscriptions, symbols and signs that identify the category of the document, its scope and application, etc. The entire inner surface of the front cover of the translucent material, except for the area for photograph with molecular surface layer, is coated with an adhesive coating, which ensures permanent joint of the identification document after heat treatment under pressure. The identification document has security luminescent marks on inner surfaces of the upper and lower translucent layers and a luminescent coating on the surface of the contour layer of its substrate. The information insert is placed on the substrate and the owner photograph window is positioned under the inner surface area of the upper translucent layer with molecular surface layer (RU 2128587, 10.04.1999). The disadvantage of this known solution is insufficient security level.

A cash coin is known which comprises an outer ring, two inserts stacked one on top of the other and located inside the outer ring, at least one intermediate layer located between the two inserts for adhesion of two inserts to each other. The outer ring and each of the two inserts are made of different materials. The outer ring and two coin inserts are made of multilayer coated materials, each insert has a surface having two opposite sides and an outer peripheral surface, the outer ring and each of the inserts are fastened together through a plurality of recesses formed on the outer peripheral surface of each of the inserts, each recess being made in the form of a hole on the outer peripheral surface, wherein the holes are inclined relative to the insertion direction and the holes are inclined relative to the plane coplanar to the said opposite sides (RU 2608290, 17.01.2017). The disadvantage of the coin is insufficient security level and verification of its authenticity.

The closest prior art in terms of technical essence and achieved effect is c technical solution described in WO 2012156006, 22.11.2012, which teaches a token-shaped article consisting of multiple components, including an outer metal ring and a disc-shaped plastic core, pressed together. The core of the article comprises security features, including a microchip.

The known technical solution mentions neither the ability of using plastic materials based on paper layers in the article, nor the ability of applying, onto the metal component of the article, an embossing in the form of engraved identification images, tactile and similar elements; this fact, on the one hand, impairs the level of security of the article, and on the other hand, makes it difficult to verify authenticity of the article.

The object of the invention is to provide an identification article having an enhanced level of security, which is simple both in the manufacture and in its authentication.

The object of the invention is attained by a polymer-containing composite article, comprising an outer metal ring and an inner disc insert made of laminated plastic including stacked paper sheets impregnated with a polymer binder throughout the volume so that surface of each sheet is covered with a polymer layer, and comprising visual and/or hidden security features, wherein at least one of the article components has an embossing, and the ring and the disc insert are permanently joined together by pressing, and wherein dimensions of the article are in conformity with the relations:
0.8≤δ2/δ1 <1;
D1-D2≥8;
0.3≤S 1/S2<0.9;
D2>16 mm;
Δ≤1;
   where D1 is outer diameter of the metal ring, mm;
   D2 - diameter of the disc insert, mm;
   S1 - area of the metal ring, excluding edge surface, mm²;
   S2 - area of the disc insert, mm²;
   δ1 - maximum thickness of the metal ring, mm;
   δ2 - maximum thickness of the disc insert, mm;
   Δ - difference between maximum and minimum protruding elements of the metal component of the article, mm.

In a particular embodiment, the laminated plastic comprises reinforced fibers, and the metal ring is made of a metal or metal alloy, including that produced by powder metallurgy.

In a particular embodiment, the embossing is made in the form of graphic marking comprising geometrical figures, alphanumeric symbols, constant and/or different width strokes, guilloche elements or a combination of said graphic elements.

In a particular embodiment, the disc insert comprises a printing foil and/or a security thread.

In a particular embodiment, the insert disc comprises authenticity features formed with ferromagnetic materials, IR absorbing substances, UV and IR luminescent substances.

In a particular embodiment, at least one of the article components is made of a material having specified conductive or magnetic properties.

In a particular embodiment, the disc insert includes a microchip for contactless and/or contact data reading and writing, such as an RFID tag.

The article may comprise information that personally identifies the owner.

In a particular embodiment, the article components made of metal material and of laminated plastic are geometrically complementary.

In a particular embodiment, the article is a medal or coin, or token or valuable document, or badge.

The relations were determined experimentally, based on technological properties of the materials essential for a real article, since with other dimensions, the process of manufacturing the combined article is impossible as such, as will be explained below.

D1-D2≥8 is a minimum sufficient relation to obtain a generating edge surface (surface on the coin or token article, located at the interface with the rim end face) and to place a minimum number of inscriptions in the form of engraving on the metal.

D2>16 mm was chosen proceeding from technical efficiency, since as the value is decreasing, the surface area with a pattern becomes poorly perceived visually.

On the edge surface a security microtext feature can be applied, which will not be subject to severe wear when the following parameter Δ≤1 is observed.

Δ≤1 is difference between maximum and minimum protruding elements of the metal component of the article.

At 0.8 δ2/δ1<1, the disc insert is outside the abrasion area, which increases the service life and enhances protection from mechanical damage of the security features present on the surface. The maximum wear area in the inventive articles is in the contact area between the metal ring and the non-metal disc insert.

When the condition 0.3≤S1/S2<0.9 is met, it becomes possible to provide security features such as visual and hidden security features characteristic of coins on the surface of the metal ring, visual and hidden security elements characteristic of banknotes on the surface of the non-metallic disc insert, which combine the total weight characteristics of the non-metallic insert and the metal ring according to their unique characteristics.

The non-metallic disc insert has the following characteristics: it is made of a multilayer extruded and laminated material containing stacked sheets of paper, impregnated with a polymer binder throughout the volume so that surface of each sheet is covered with a polymer layer, and the disc insert comprises visual and/or hidden security features.

Furthermore, the security features can be made in the form of elements typical for paper and plastic printing security articles, such as banknotes or identification documents.

Security features can also be introduced into paper during its manufacture and/or made by printing on surface of finished paper layers, have the form of a security strip, security fibers, a watermark, optically variable images produced by printing, including those with magnetic properties, latent color images that become visible under UV excitation, formed, inter alia, by paints and varnishes containing nanocrystalline materials based on quantum dots: the non-metallic disc insert may also contain instrument-detectable and/or machine-readable security elements, chips.

Implementation of the inventive article within the scope of the set of essential features included in the independent claim provides obvious advantages in terms of security of traditional articles, and in particular of the most pertinent prior art article.

The article according to the invention has the following advantages:
- high level of security against counterfeiting, exceeding that of tokens, metal coins and plastic cards;
- employed innovative methods are out of the reach for efforts of primitive simulation;
- high wear resistance of the article is tens of times higher than that of banknote articles and is approaching in terms of circulation to coins;
- in addition, the article has high consumer qualities for the public, such as low weight, high decorative properties, the ability to use various shapes and sizes;
- the article is easy to manufacture, has a low cost and is capable of using advanced instrumentally authenticated security features hidden from the public and providing reliable verification in counting and sorting devices.

The process for manufacturing an article from a combination of laminated plastic and metal generally comprises the steps of:
- making a paper base with special properties;
- performing secure printing of front and back layers with special inks used for printing banknotes, including variable color, UV, IR and other inks;
- impregnating of outer and inner layers with special polymer compositions;
- pressing the layers at high temperature and pressure to form a monolith with the ability of forming a special embossing on the surface that provides specified visual (appearing in oblique and/or transmitted light) and tactile properties of the article;
- pressing the laminated plastic workpiece into a frame made of a metal alloy;
- finishing, counting and packaging the articles.

As follows from the above description of the method for manufacturing a composite identification article, each type of the article can be unique not only in terms of its printing, but also in terms of composition of inner paper layers, composition of metal alloy of the ring. The composition and security characteristics of each layer can be specified by the customer and formed at the stage of manufacturing both a paper web and a metal workpiece.

When pressing a semi-finished article, due to the use of a special relief provided on mold surfaces, a special embossed pattern is formed on the front and back sides of the articles, providing specified visual and tactile properties of the article.

Using conventional processing methods, which may include machining and laser cutting, various shapes can be obtained in the final production steps.

Where necessary, an RFID (chip) can be embedded in the article for contactless and/or contact reading of serial number or other information applied on the article.

The essence of the invention is illustrated by specific examples and illustrations given in the drawings, where:
Fig. 1 is a cross-sectional view of the article;
Fig. 2 shows view A in Fig.1;
Fig. 3 shows a version of appearance of the article;
Fig. 4 is a cross-sectional view of the version of the article.

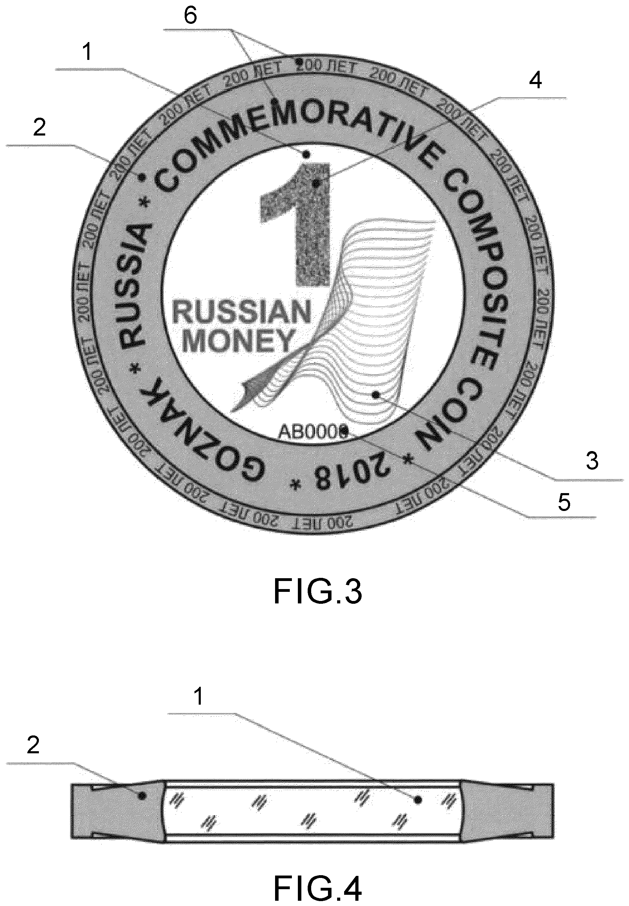

The article consists of a disc insert 1 and an outer ring 2 (Fig. 3, Fig. 4). Surface of the disc insert 1 comprises a security feature 3, a denomination symbol 4 of the coin article, and a serial number 5 of the coin. Surface of the outer ring 2 comprises an engraving 6 in the form of embossed text.

### Example 1

A token coin article was made from a disc insert 1 of laminated plastic (Figs. 3, 4) and an outer ring 2 of a copper-nickel alloy (Figs. 3, 4).

Laminated plastic was prepared from 7 paper layers impregnated with thermoplastic resin and pressed together at 200°C. At the manufacturing step, 10% of a colorless inorganic luminescent compound based on Sr₄Al₁₄O₂₅: Eu, Dy, which exhibits a blue-green glow under UV radiation in the wavelength range of 300-370 nm, was introduced into the composition of the paper layers.

At the printing step, grids and guilloche elements 3 were offset printed on both sides of the disc insert base made of laminated plastic (Fig. 3), and a coin denomination symbol 4 was applied with color-variable paint; furthermore, on the front side the paint includes IR absorber based on blue phthalocyanine dye having selective IR absorption in the wavelength range of 700-900 nm.

An outer ring workpiece of a copper-nickel alloy having a specified electrical conductivity was made by cold stamping from sheet material.

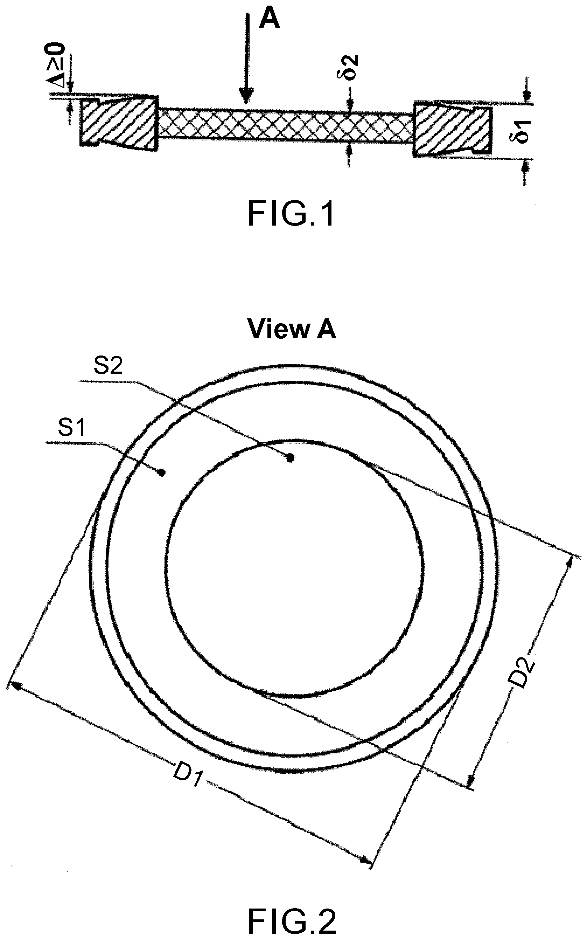

At the final manufacturing step, the disc insert 1 (Fig. 2) and the outer metal ring 2 (Fig. 2) were joined together by pressing to provide permanent joint. Engraving in the form of an embossed text 6 was applied on surface of the metal component of the article (Fig. 3). The article had the following geometric dimensions (Fig. 1, 2):
D1 - 26.5 mm,
D2 - 19 mm,
S1 - 267.9 mm²,
S2 - 283.4 mm²,
δ1 - 2.0 mm,
δ2 - 1.6 mm.

### Example 2

A token coin article was made from laminated plastic in the form of a disc insert 1 (Fig. 3) and an outer ring formed by powder metallurgy from a pure metal or metal alloy 2 (Fig. 3).

The laminated plastic was composed of 5 paper layers impregnated with thermosetting resin and pressed together at 200°C. At the manufacturing step, 2% of a colorless luminescent compound based on a chelate complex of europium, which exhibits a red glow under UV radiation in the wavelength range of 300-370 nm, was introduced into composition of the paper layers.

At the papermaking step, a holographic foil was applied onto the outer layer on the face of the laminated plastic base.

At the printing step, grids and guilloche elements 3 were offset printed on both sides of the disc insert base made of laminated plastic (Fig. 3), and a sight alignment element was formed on the front and back sides for authentication in transmitted light.

The ring workpiece with specified electrical conductivity and/or magnetic properties was made by powder metallurgy from a pure metal or metal alloy.

At the final manufacturing step, the plastic disc insert 1 (Fig. 4) and the outer metal ring 2 (Fig. 4) were joined together by pressing to provide permanent joint. Engraving in the form of a embossed text 5 was applied on surface of the metal component of the article (Fig. 3). The article had the following geometric dimensions (Figs. 1, 2):
D1 - 39 mm,
D2 - 28 mm,
S1 - 578.6 mm²,
S2 - 615.4 mm²,
δ1 - 2.8 mm,
δ2 - 1.5 mm.

### Example 3.

A token coin article was made from a disc insert 1 of laminated plastic (Fig. 3) and an outer ring 2 of a copper-zinc alloy (Fig. 3).

Laminated plastic was prepared from 6 paper layers impregnated with thermoplastic resin and pressed together at 200°C. At the manufacturing step, 5% of a colorless inorganic luminescent compound based on Sr4Al14O25: Eu, Dy, which exhibits a blue-green glow under UV radiation in the wavelength range of 300-370 nm, was introduced into composition of the paper layers.

At the printing step, grids and guilloche elements 3 were offset printed on both sides of the base of the disc insert made of laminated plastic (Fig. 3).

In addition, at the printing step, an individual serial number of the coin 6 was applied onto the plastic base by inkjet printing (Fig. 3).

The outer ring workpiece with a specified electrical conductivity was made by cold stamping from sheet material.

At the final manufacturing step, the disc insert 1 (Fig. 4) and the outer metal ring 2 (Fig. 4) were joined together by pressing to provide permanent joint. Engraving in the form of microtext 6 was applied onto the surface of the metal component of the article (Fig. 3). The article had the following geometric dimensions (Figs. 1, 2):
D1 - 31 mm,
D2 - 22 mm,
S1 - 374.5 mm²,
S2 - 379.9 mm²,
δ1 - 2.2 mm,
δ2 - 1.8 mm.

### Example 4.

A token coin article with user's personal data 3 (Fig. 3) was made from a disc insert 1 of laminated plastic 1 (Fig. 3) and an outer ring 2 of tin bronze (Fig. 3), and an RFID was embedded therein for contactless room access verification.

Laminated plastic was prepared from 9 paper layers impregnated with thermosetting resin and pressed together at 200°C. At the manufacturing step, 20% of a colorless inorganic luminescent compound based on Sr₄Al₁₄O₂₅: Eu, Dy, which exhibits a blue-green glow under UV radiation in the wavelength range of 300-370 nm, was introduced into composition of the paper layers.

At the printing step, grids and guilloche elements 3 were offset printed on both sides of the base of the disc insert made of laminated plastic (Fig. 3).

Additionally, at the printing step, an individual serial number and/or personal data of the user of the medal 5 was applied by inkjet printing onto the plastic base of the disc insert (Fig. 3).

The outer ring workpiece of tin bronze with a specified electrical conductivity was made by cold stamping from sheet material.

At the final manufacturing step, the disc insert 1 (Fig. 4) and the outer metal ring 2 (Fig. 4) were joined together by pressing to provide permanent joint. Engraving in the form of embossed text 6 was applied onto the surface of the metal component of the article (Fig. 3). The article had the following geometric dimensions (Fig. 1, 2):
D1 - 33 mm,
D2 - 24 mm,
S1 - 402.7 mm²,
S2 - 452.2 mm²,
δ1 - 2.6 mm,
δ2 - 2.2 mm.

As apparent from the above examples, a composite identification article has been designed, which can be manufactured by simple methods, has an enhanced level of security and can be easily verified for its authenticity.

## Claims

1. A polymer-containing composite security article, comprising an outer metal ring and an inner disc insert made of laminated plastic including stacked paper sheets impregnated with a polymer binder throughout the volume so that surface of each sheet is covered with a polymer layer, and comprising visual and/or hidden security elements, wherein at least one of the article components has an embossing, and the ring and the disc insert are permanently joined together by pressing, and wherein dimensions of the article are in conformity with the relations:
0.8≤δ2/δ1<1;
D1-D2≥8;
0.3≤S1/S2<0.9;
D2>16 mm;
Δ≤1,
where D1 is outer diameter of the metal ring, excluding an edge surface, mm;
D2 - diameter of the disc insert, mm;
S1 - area of the metal ring, excluding edge surface, mm²;
S2 - area of the disc insert, mm²;
δ1 - maximum thickness of the metal ring, mm;
δ2 - maximum thickness of the disc insert, mm;
Δ - difference between maximum and minimum protruding elements of the metal component of the article, mm.

2. An article according to claim 1, **characterized in that** the laminated plastic comprises reinforced fibers.

3. An article according to claim 1, **characterized in that** the metal ring is made of a metal or metal alloy, in particular, produced by powder metallurgy.

4. An article according to claim 1, **characterized in that** the embossing is made in the form of graphic markings containing geometric figures, alphanumeric symbols, constant and/or different width strokes, guilloche elements or a combination of said graphic elements.

5. The article according to claim. 1, **characterized in that** the disc insert comprises a printing foil and/or a security thread.

6. An article according to claim 1, **characterized in that** the insert disc comprises authenticity features formed using ferromagnetic materials, IR absorbing substances, UV and IR luminescent substances.

7. An article according to claim 1, **characterized in that** at least one of its components is made of a material having specified conductive and/or magnetic properties.

8. An article according to claim 1, **characterized in that** the disc insert includes a microchip for contactless and/or contact data reading and writing, such as an RFID tag.

9. An article according to claim 1, **characterized in that** it contains information identifying the owner.

10. An article according to claim 1, **characterized in that** the article components made of metal material and of laminated plastic are geometrically complementary items.

11. An article according to claim 1, **characterized in that** it is a medal or coin, or token, or valuable document, or badge.
